# FASCICULE DE BREVET EUROPEEN

(11) **EP 0 432 074 B1**
(45) Date de publication et mention de la délivrance du brevet: **26.03.1997**
(21) Numéro de dépôt: 90470065.5
(22) Date de dépôt: 03.12.1990
(51) Int. Cl.: B01D 53/00, B01D 53/34, F23J 15/00

(54) **Procédé et dispositif de réduction de la teneur en gaz polluants acides de fumées issues d'un dispositif d'incinération**
Verfahren und Vorrichtung zur Verminderung des Säuregehalts von Abgasen einer Verbrennungsanlage
Process and apparatus for reducing the content of acid gas pollutants in waste gases from an incineration device

(30) Priorité: 08.12.1989 FR 8916438
(43) Date de publication de la demande: 12.06.1991
(73) Titulaire: SOCIETE DITE: SOGEA, F-92851 Rueil-Malmaison (FR)
(72) Inventeur: Marchand, Denis, F-78160 Marly le Roi (FR); Patte, Philippe, F-54000 Nancy (FR)
(74) Mandataire: Puit, Thierry

(56) Documents cités:
- EP-A- 0 337 910
- US-A- 3 995 010

## Description

La présente invention est relative à un procédé et un dispositif de réduction de la teneur en gaz polluants acides de fumées issues d'un dispositif d'incinération.

La présente invention a plus particulièrement pour objet un procédé et un dispositif des types ci-dessus pour des fumées issues de l'incinération d'ordures ménagères.

En effet, les ordures ménagères contiennent du chlore, principalement sous forme de matières plastiques chlorées telles que des chlorures de polyvinyle (PVC).

La destruction par incinération de ces produits génère ainsi des fumées contenant du chlorure d'hydrogène gazeux HCl en des proportions variables qui sont, en moyenne, de 1,5 grammes par normal mètre cube (1,5 g/Nm3).

La protection de l'environnement impose de traiter les fumées issues de ces installations d'incinération pour abaisser la teneur en polluants acides.

On connait ainsi, d'après le brevet FR 2 592 812, un procédé et un dispositif de traitement des fumées issues de l'incinération des ordures ménagères dans lequel, après avoir été dépoussiérées, les fumées subissent une phase de refroidissement avant d'être rejetées à l'atmosphère, ce refroidissement étant effectué par échange thermique indirect avec un fluide froid entraînant une condensation de la vapeur d'eau présente dans ces fumées qui capte les polluants acides qu'elles contiennent.

Ce procédé et ce dispositif, si ils permettent effectivement de limiter à moins de 100 mg/Nm3 les rejets en HCl dans les fumées, ne permettent pas de façon simple et économique d'atteindre des teneurs inférieures à 50 mg/Nm3 qui vont pourtant constituer les nouvelles normes de rejet.

En effet, si ce procédé et ce dispositif permettent, en théorie, de satisfaire à cette nouvelle exigence, ils nécessitent alors de doubler la surface d'échange des échangeurs de chaleur, les fumées étant par ailleurs alors saturées en vapeur d'eau et présentant des vésicules liquides de très faible diamètre ( de 10 à 50 µm) difficiles à capter.

Ainsi, cette solution ne permet de répondre aux nouvelles exigences de rejet qu'avec un échangeur thermique de très grande taille, donc cher, en sortant de plus des fumées saturées à température ambiante et chargées de vésicules liquides qui ne peuvent être captées qu'avec des moyens très onéreux et d'entretien délicat.

Par ailleurs, plus on veut abaisser la teneur en polluants gazeux dans les fumées par ce procédé plus on condense d'eau et plus on capte d'HCl, mais plus la concentration en acide des condensats baisse. On augmente alors la quantité de condensats qu'il faut ensuite traiter.

De plus cette solution implique un accroissement de la consommation énergétique due à la mise en circulation du fluide de refroidissement, celui ci circulant à plus fort débit et sur un parcours plus long.

La présente invention a donc pour but de satisfaire de manière simple et économique à cette nouvelle exigence de rejet.

Un autre but de la présente invention et de réduire au minimum le volume de condensat acide qu'il faut ensuite neutraliser.

La présente invention a donc pour objet un procédé de réduction de la teneur en gaz polluants acides solubles dans l'eau contenus dans des fumées issues d'un dispositif d'incinération selon la revendication 1.

Un autre objet de la présente invention est un dispositif selon la revendication 3 pour la mise en oeuvre du procédé ci-dessus.

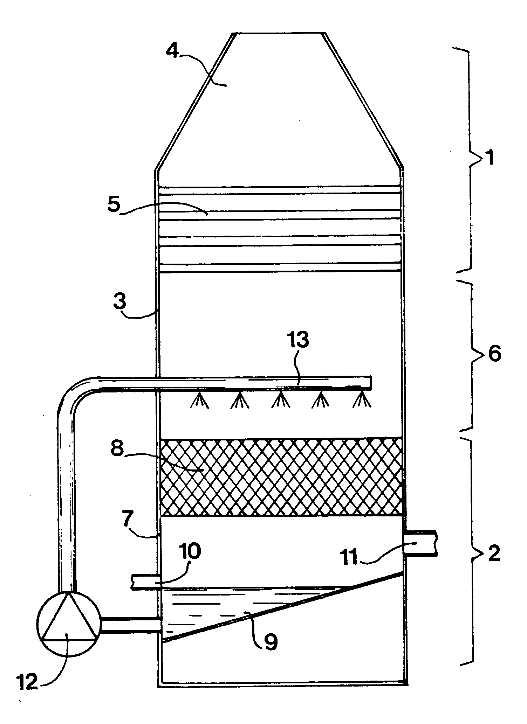

Les autres caractéristiques et avantages ressortiront à la suite de la description qui va suivre faite en référence au dessin annexé unique donné uniquement à titre d'exemple et qui représente un schéma du dispositif de traitement selon l'invention.

Comme on le voit sur la figure unique, un dispositif selon l'invention est constitué d'une partie supérieure 1 où se déroule le processus de condensation par échange thermique indirect et d'une partie inférieure 2 où se déroule le lavage des fumées arrivant de la partie supérieure 1.

La partie supérieure 1 contient un échangeur thermique tel que celui décrit dans le brevet FR 2 592 812.

Cette partie supérieure 1 est ainsi constituée d'une enveloppe externe 3, par exemple rectangulaire, muni d'une trémie 4 d'arrivée des fumées à traiter produites par un dispositif d'incinération non représenté.

En dessous de cette trémie 4, dans l'enveloppe 3, un échangeur thermique indirect 5 est placé, constitué par exemple d'une pluralité de tubes formant un faisceau à l'intérieur desquels circule un fluide de refroidissement.

La partie inférieure 2, reliée à la partie supérieure 1 par une zone d'écoulement 6 du liquide condensé dans l'échangeur 5, présente à l'intérieur d'une enveloppe 7 un corps de garnissage 8.

Ce corps de garnissage 8 peut être par exemple constitué de mailles métalliques ou plastiques ou d'anneaux.

De préférence, afin de résister aux acides, le corps de garnissage 8 est en matière plastique telle qu'un polypropylène par exemple.

En dessous de ce corps de garnissage 8, à l'intérieur de l'enveloppe 7, un réservoir 9 du liquide condensé est ménagé avec un dispositif à trop-plein 10.

Entre la partie inférieure du corps de garnissage 8 et le trop-plein 10 un conduit d'évacuation des fumées 11 débouche de l'enveloppe 7.

Par ce moyen le condensat formé par l'échangeur thermique 5 s'écoule uniformément de l'enveloppe 3 vers l'enveloppe 7 et est donc distribué uniformément sur toute la surface supérieure du corps de garnissage 8.

Selon une variante de l'invention, un dispositif de recyclage 12 permet, à partir du réservoir 9, de recycler une partie du liquide condensé recueilli dans ce réservoir au dessus du corps de garnissage 8 dans la zone d'écoulement 6.

Pour permettre une distribution uniforme, à la face supérieure du corps de garnissage 8, du liquide recyclé par le dispositif de recyclage 12, il est prévu un dispositif de pulvérisation 13 ou un jeu de goulottes à trous ou à débordement ou tout autre dispositif de distribution de liquide.

Il va maintenant être décrit le procédé de fonctionnement du dispositif décrit ci-dessus.

Les fumées à traiter, à une température comprise entre 220°C et 300°C, arrivent par la trémie 4 dans l'échangeur de chaleur 5. Là, selon le phénomène de condensation décrit dans le brevet FR 2 592 812, l'eau contenue dans les fumées condense et capte l'acide chlorhydrique gazeux contenu dans les fumées.

Ainsi, les fumées à traiter et le condensat s'écoulant de haut en bas, un mélange constitué de fumées appauvries en HCl gazeux et d'eau enrichie en HCl s'écoule en dessous de l'échangeur 5 dans la zone d'écoulement 6.

Ces fumées peuvent être ou non saturées en vapeur d'eau.

A la sortie de l'échangeur 5, les fumées contiennent donc de la vapeur d'eau de pression partielle PH2O et du HCl gazeux de pression partielle PHCl. Le condensat pour sa part est constitué d'eau de pression de vapeur PsH20 inférieure ou égale à PH20 et d'acide chlorhydrique de pression de vapeur PsHCl inférieure à PHCl.

Ce mélange circulant dans le corps de garnissage, les phases liquide et gazeuse sont intimement mises en contact ce qui favorise l'échange de matière du gaz vers le liquide ainsi que l'échange thermique entre le condensat froid et les fumées plus chaudes, le condensat étant utilisé comme liquide de lavage des fumées.

Ainsi, on diminue la quantité d'HCl présente dans les fumées par absorption par le condensat.

En variante, on utilise un recyclage du condensat du réservoir 9 vers la surface supérieure du corps de garnissage 8, le condensat recyclé étant utilisé lui aussi comme liquide de lavage des fumées. Ainsi, on augmente les échanges de matière et on augmente donc la concentration du condensat (qui est faible à la sortie de l'échangeur thermique 5).

A la sortie du corps de garnissage 8, de grosses gouttes de condensat sont formées qui peuvent être facilement captées par gravité.

Dans certains cas, il peut être utile, à la sortie du conduit d'évacuation 11, de prévoir un dévésiculeur de type connu.

Selon une autre variante de l'invention il est possible d'éliminer SO2.

En effet, les échangeurs à condensation sont connus pour capter très peu SO2 en raison du pH du condensat. Ceci est dû au fait que, rapidement, la tension de vapeur de SO2 au dessus du condensat est proche de la pression partielle de SO2 dans les fumées. De plus, la résistance au transfert dans la phase liquide est importante. Ainsi, le rendement de captation de SO2 est faible, même si l'échangeur est de grande dimension et ceci indépendamment du rendement de captation d'HCl.

Avec le dispositif selon l'invention constitué d'un échangeur à condensation prolongé par un corps de garnissage et présentant un système de recyclage du condensat tel que décrit ci-dessus, on peut ajouter dans le condensat recyclé des produits alcalins qui augmentent le pH du condensat et diminuent ainsi la pression de vapeur saturante de SO2 ce qui augmente d'autant le rendement de captation de SO2.

Avec un dispositif du type décrit fonctionnant selon l'invention il a été ainsi obtenu des fumées ressortant par le conduit 11 avec des teneurs en HCl inférieures à 50 mg/Nm3 pour un débit de fumées de 5000 Nm3/heure, une hauteur de garnissage de 1,2 mètres et un débit de recyclage du condensat de 2 à 4 m3/heure, le débit de condensat effectivement évacué étant de 0,4 m3/h.

Grâce au lavage des fumées, issues du dispositif échangeur thermique, par les condensats produits par ce dispositif on parvient à obtenir un lavage efficace de ces fumées en évitant pourtant d'utiliser un liquide de lavage supplémentaire ce qui réduit au minimum le volume des effluents liquides à traiter.

## Revendications

1. Procédé de réduction de la teneur en polluants acides solubles dans l'eau de fumées issues d'un dispositif d'incinération dans lequel les fumées à traiter sont refroidies par passage de haut en bas à travers un échangeur thermique indirect (5), l'échange de chaleur indirect avec un fluide froid produisant un condensat chargé en polluants acides, caractérisé en ce que après cette phase de refroidissement, les fumées encore chargées en polluants acides sont lavées en utilisant le condensat comme liquide de lavage, cette phase de lavage s'effectuant par passage, de haut en bas, des fumées encore chargées en polluants acides et du condensat provenant de l'échangeur thermique (5) à travers un corps de garnissage (8) dans lequel lesdites fumées et le condensat sont intimement mis en contact, favorisant l'absorption, par le condensat, des polluants acides contenus dans les fumées, le condensat formé par l'échangeur thermique (5) s'écoulant uniformément de cet échangeur (5) vers le corps de garnissage (8) par une zone d'écoulement (6) qui relie l'échangeur thermique (5) au corps de garnissage (8), et ledit condensat étant distribué uniformément sur toute la surface supérieure du corps de garnissage (8).

2. Procédé suivant la revendication 1, caractérisé en ce que le condensat, à la sortie de la phase de lavage des fumées issues de la phase de refroidissement, est partiellement recyclé comme liquide de lavage, ce recyclage s'effectuant dans la zone d'écoulement (6), au-dessus du corps de garnissage (8).

3. Dispositif pour la mise en oeuvre du procédé suivant l'une des revendications 1 et 2 comprenant, en aval du dispositif d'incinération, une partie supérieure (1) constituée d'une enveloppe externe (3) dans laquelle est placé un échangeur thermique indirect (5) à condensation, ledit échangeur thermique (5) étant traversé de haut en bas par les fumées à traiter en produisant un condensat chargé en polluants acides, caractérisé en ce que ledit dispositif comprend une partie inférieure(2) qui présente, à l'intérieur d'une enveloppe (7), un dispositif de lavage des fumées issues de l'échangeur thermique (5), ce dispositif de lavage étant constitué d'un corps de garnissage (8) traversé de haut en bas par les fumées et le condensat provenant de l'échangeur thermique (5), ce condensat étant utilisé comme liquide de lavage, la partie inférieure (2) étant reliée à la partie supérieure (1) par une zone d'écoulement (6) du liquide condensé dans l'échangeur thermique (5), l'enveloppe (3) de la partie supérieure (1), l'enveloppe (7) de la partie inférieure (2) et la zone d'écoulement (6) formant une seule paroi de section constante, ce qui permet au condensat formé par l'échangeur thermique (5) de s'écouler uniformément de l'enveloppe (3) de la partie supérieure (1) vers l'enveloppe (7) de la partie inférieure (2), et donc d'être distribué uniformément sur toute la surface supérieure du corps de garnissage (8).

4. Dispositif suivant la revendication 3, caractérisé en ce que le corps de garnissage (8) est constitué de mailles métalliques ou plastiques ou d'anneaux.

5. Dispositif suivant l'une des revendications 3 et 4, caractérisé en ce qu'un réservoir (9) de collecte du liquide condensé, ménagé avec un dispositif à tropplein (10), est disposé en-dessous du corps de garnissage (8), à l'intérieur de l'enveloppe (7) de la partie inférieure (2), un conduit (11) d'évacuation des fumées débouchant de cette enveloppe (7) entre la partie inférieure du corps de garnissage (8) et le tropplein (10).

6. Dispositif suivant la revendication 5, caractérisé en ce qu'un dispositif de recyclage (12) permet, à partir du réservoir (9), de recycler au-dessus du corps de garnissage (8), dans la zone d'écoulement (6), une partie du liquide condensé recueilli dans le réservoir (9), un dispositif de distribution (13) étant prévu pour permettre une distribution uniforme de ce liquide à la face supérieure du corps de garnissage (8).

## Claims

1. A process for reducing the content of acidic pollutants soluble in water and contained in fumes discharged from an incineration plant, in which the fumes to be treated are cooled by passing downwardly through an indirect heat exchanger (5), the indirect heat exchange with a cold fluid producing a condensate charged with acidic pollutants, characterized in that, after this cooling step, the fumes, which are still charged with acidic pollutants, are washed by using the condensate as the washing liquid, this washing stage taking place by passing the fumes, which are still charged with acidic pollutants, and the condensate from the heat exchanger (5) downwardly through a packing body (8) in which the said fumes and the condensate are in intimate contact with each other, in a manner promoting absorption by the condensate of the acidic pollutants in the fumes, the condensate formed by the heat exchanger (5) flowing uniformly from this exchanger (5) to the packing body (8) through a flow zone (6) which connects the heat exchanger (5) to the packing body (8), and the said condensate being supplied evenly over the entire upper surface of the packing body (8).

2. A process according to Claim 1, characterized in that, on leaving the stage of washing the fumes discharged from the cooling stage, the condensate is partially recycled as the washing liquid, this recycling being carried out in the flow zone (6) above the packing body (8).

3. A device for carrying out the process according to either of Claims 1 and 2, comprising, downstream of the incineration plant, an upper portion (1) formed by an external jacket (3) in which an indirect condensation-type heat exchanger (5) is placed, the fumes to be treated passing downwardly through the said heat exchanger (5), producing a condensate charged with acidic pollutants, characterized in that the said device comprises a lower portion (2) which has, inside a jacket (7), a device for washing the fumes discharged from the heat exchanger (5), this washing device being formed by a packing body (8) through which the fumes and the condensate from the heat exchanger (5) pass downwardly, this condensate serving as the washing liquid, the lower portion (2) being connected to the upper portion (1) by a flow zone (6) for the liquid condensed in the heat exchanger (5), the jacket (3) of the upper portion (1), the jacket (7) of the lower portion (2) and the flow zone (6) forming a single wall of constant cross-section, which allows the condensate formed by the heat exchanger (5) to flow evenly from the jacket (3) of the upper portion (1) to the jacket (7) of the lower portion (2), thus being supplied evenly over the entire upper surface of the packing body (8).

4. A device according to Claim 3, characterized in that the packing body (8) is formed by metal or plastics mesh or by rings.

5. A device according to either of Claims 3 and 4, characterized in that a collecting tank (9) for the condensed liquid, provided with an overflow device (10), is arranged below the packing body (8), inside the jacket (7) of the lower portion (2), with a pipe (11) for draining the fumes emerging from this jacket (7) between the lower portion of the packing body (8) and the overflow (10).

6. A device according to Claim 5, characterized in that a recycling device (12) allows some of the condensed liquid collected in the tank (9) to be recycled above the packing body (8) into the flow zone (6) from the tank (9), with a supply device (13) being provided to allow even supply of this liquid at the upper face of the packing body (8).

## Patentansprüche

1. Verfahren zur Verminderung des Gehalts an wasserlöslichen sauren Schadstoffen in Abgasen einer Verbrennungsanlage, in welchem die zu behandelnden Abgase abgekühlt werden, indem sie von oben nach unten durch einen indirekten Wärmeaustauscher (5) hindurchströmen, wobei durch den indirekten Wärmeaustausch mit einem kalten Fluid ein mit sauren Schadstoffen belastetes Kondensat entsteht, **dadurch gekennzeichnet**, **daß** nach dieser Abkühlphase die noch mit sauren Schadstoffen belasteten Abgase gewaschen werden, wobei das Kondensat als Waschflüssigkeit verwendet wird, diese Waschphase vor sich geht, indem die noch mit sauren Schadstoffen belasteten Abgase und das vom Wärmeaustauscher (5) kommende Kondensat von oben nach unten durch eine Füllkörperschicht (8) hindurchströmen, in welcher diese Abgase und das Kondensat innig miteinander in Berührung gebracht werden, wodurch die Absorption der in den Abgasen enthaltenen sauren Schadstoffe durch das Kondensat begünstigt wird, das im Wärmeaustauscher (5) gebildete Kondensat durch eine Strömungszone (6), die den Wärmeaustauscher (5) mit der Füllkörperschicht (8) verbindet, gleichmäßig von diesem Wärmeaustauscher (5) zu der Füllkörperschicht (8) fließt und dieses Kondensat über die gesamte Oberseite der Füllkörperschicht (8) einheitlich verteilt wird.

2. Verfahren nach Anspruch 1, **dadurch gekennzeichnet**, **daß** das Kondensat am Ende der Waschphase der aus der Abkühlphase kommenden Abgase teilweise als Waschflüssigkeit zurückgeleitet wird, wobei diese Rezirkulierung in die Strömungszone (6) oberhalb der Füllkörperschicht (8) erfolgt.

3. Vorrichtung zur Durchführung des Verfahrens gemäß Anspruch 1 oder 2, welche nach der Verbrennungsanlage einen oberen Teil (1) umfaßt, der aus einem Außenmantel (3) besteht, in welchem ein indirekter Kondensationswärmetauscher (5) angeordnet ist, der von oben nach unten von den zu behandelnden Abgasen durchströmt wird, wobei ein mit sauren Schadstoffen belastetes Kondensat entsteht, **dadurch gekennzeichnet, daß** die Vorrichtung einen unteren Teil (2) umfaßt, der im Inneren eines Mantels (7) eine Wascheinrichtung für die aus dem Wärmeaustauscher (5) kommenden Abgase aufweist, wobei diese Wascheinrichtung aus einer Füllkörperschicht (8) besteht, die von oben nach unten von den Abgasen und dem aus dem Wärmeaustauscher (5) kommenden Kondensat durchströmt wird, das als Waschflüssigkeit verwendet wird, und der untere Teil (2) mit dem oberen Teil (1) durch eine Strömungszone (6) für die im Wärmeaustauscher (5) kondensierte Flüssigkeit verbunden ist, wobei der Mantel (3) des oberen Teils (1), der Mantel (7) des unteren Teils (2) und die Strömungszone (6) eine einzige Wand mit gleichbleibendem Querschnitt bilden, was es dein im Wärmeaustauscher (5) gebildeten Kondensat erlaubt, gleichmäßig vom Mantel (3) des oberen Teils (1) zum Mantel (7) des unteren Teils (2) zu fließen und somit über die gesamte Oberseite der Füllkörperschicht (8) einheitlich verteilt zu werden.

4. Vorrichtung nach Anspruch 3, **dadurch gekennzeichnet, daß** die Füllkörperschicht (8) aus Metall- oder Kunststoffmaschen oder -ringen besteht.

5. Vorrichtung nach Anspruch 3 oder 4, **dadurch gekennzeichnet**, **daß** im Inneren des Mantels (7) des unteren Teils (2) unter der Füllkörperschicht (8) ein mit einem Überlauf (10) versehener Sammelbehälter (9) für die kondensierte Flüssigkeit angeordnet ist, wobei zwischen dem Boden der Füllkörperschicht (8) und dem Überlauf (10) eine Ableitung (11) für das Abgas aus diesem Mantel (7) hinausführt.

6. Vorrichtung nach Anspruch 5, **dadurch gekennzeichnet**, **daß** es eine Kreislaufeinrichtung (12) erlaubt, einen Teil der kondensierten Flüssigkeit, die vom Behälter (9) aufgenommen worden ist, aus diesem in die Strömungszone (6) oberhalb der Füllkörperschicht (8) zu rezirkulieren, wobei eine Verteileinrichtung (13) vorgesehen ist, um eine gleichmäßige Verteilung dieser Flüssigkeit auf der Oberseite der Füllkörperschicht (8) zu ermöglichen.
